Europäisches Patentamt

(19) European Patent Office

Office européen des brevets

(11) Numéro de publication: **0 083 536**
**B2**

(12) **NOUVEAU FASCICULE DE BREVET EUROPÉEN**

(51) Int. Cl. ⁵ : **H 01 G  13/00,  H 01 G  4/30**

(45) Date de publication du nouveau fascicule du brevet:
21.03.90

(21) Numéro de dépôt: **82402372.5**

(22) Date de dépôt: **23.12.82**

(54) **Procédé de fabrication en continu de condensateurs du type empilés, comportant une étape de contrôle électrique.**

(30) Priorité: **31.12.81 FR 8124583**

(43) Date de publication de la demande:
**13.07.83 Bulletin 83/28**

(45) Mention de la délivrance du brevet:
**30.10.85 Bulletin 85/44**

(45) Mention de la decision concernant l'opposition:
**21.03.90 Bulletin 90/12**

(84) Etats contractants désignés:
**DE GB NL**

(56) Documents cité:
**EP-A-0 042 137**
**CH-A-229 055**
**DE-B-1 764 542**
**DE-C-1 764 541**
**FR-A-1 28⬚ 692**
**FR-A-2 093 663**
**US-A-3 315 331**

**Brochure Siemens "Ideal für Leiterplatten: MK-Schichtkondensatoren", WS 107520, oct. 1975;**

**Déclaration du Dr. P. Petrick, faite le 17.07.86 à Landshut;**

(73) Titulaire: **L.C.C.-C.I.C.E. - COMPAGNIE EUROPEENNE DE COMPOSANTS ELECTRONIQUES**
**50, rue Jean-Pierre Timbaud B.P. 301**
**F-92402 Courbevole (FR)**

(72) Inventeur: **Anne, Jean**
**THOMSON-CSF SCPI 173, bld Haussmann**
**F-75379 Parls Cedex 08 (FR)**
Inventeur: **Roy, Claude**
**THOMSON-CSF SCPI 173, bld Haussmann**
**F-75379 Parls Cedex 08 (FR)**
Inventeur: **Fleuret, Daniel**
**THOMSON-CSF SCPI 173, bld Haussmann**
**F-75379 Parls Cedex 08 (FR)**

(74) Mandataire: **Ruellan-Lemonnier, Brigitte**
**THOMSON-CSF SCPI**
**F-92045 PARIS LA DEFENSE CEDEX 67 (FR)**

EP 0 083 536 B2

## Description

La présente invention concerne un procédé de fabrication en continu de condensateurs du type empilé, dans lequel on réalise tout d'abord un condensateur mère en forme de barreau parallélépipédique comportant une pluralité de films diélectriques métallisés dont les couches métallisées respectivement de rangs pairs et impairs sont reliées entre elles par des connexions latérales de schoopage, ledit condensateur mère étant ensuite découpé par sciage en condensateurs unitaires dont les connexions latérales de schoopage sont ensuite reliées à des fils de connexions électriques.

Un tel procédé est connu par exemple du brevet américain 2 731 706. Dans le procédé de fabrication de condensateurs décrit dans ce brevet, deux films diélectriques métallisés sur une de leurs faces sont bobinés simultanément sur une roue de grand diamètre de manière à former un empilement. Ces deux films diélectriques métallisés sont généralement sensiblement de même largeur mais bobinés légèrement décalés l'un par rapport à l'autre de manière à pouvoir ensuite relier par des connexions électriques latérales de schoopage d'une part les films de rangs pairs et d'autre part les films de rangs impairs. Des fils de connexions sont ensuite reliés au schoopage latéraux puis les condensateurs individuels sont séparés du condensateur mère par sciage, ledit condensateur mère étant maintenu sur la roue de grand diamètre sur laquelle il a été bobiné. Un tel procédé est particulièrement avantageux pour la réalisation des condensateurs en grandes séries mais ne permet pas de réaliser un contrôle électrique des condensateurs avant la soudure des fils de connexions latéraux. Ce problème devient particulièrement important lorsque lesdits condensateurs sont ensuite disposés sur des bandes pour l'alimentation automatique des chaînes de fabrication, car lesdites connexions sont généralement des épingles dont les deux bras sont reliés entre eux et qui ne permettent plus de test électrique après soudure sur les schoopages.

Un procédé conforme au préambule de la revendication 1 est également connu.

Le procédé selon l'invention permet d'éviter ces inconvénients tout en permettant d'opérer en continu sans interrompre la chaîne de fabrication. Dans le procédé selon l'invention, on réalise le sciage du condensateur mère en condensateurs individuels, chaque condensateur individuel après sciage et séparation du condensateur mère étant transféré vers la station de soudure des fils de connexions électriques. Pendant cette opération de transfert, on effectue le test électrique desdits condensateurs, ce qui permet d'éliminer les condensateurs défectueux.

Selon l'invention, telle que définie dans la revendication 1, l'extrémité du condensateur mère en forme de barreau parallélépipédique est prise sur ses connexions électriques de schoopage entre les mors d'une pince avant sciage d'un condensateur unitaire, celui-ci étant ensuite transféré à l'aide de la pince vers une station de soudure des fils de connexions électriques, l'étape de contrôle des paramètres électriques du condensateur étant réalisée à l'aide d'un signal électrique envoyé entre les mors de la pince dès que l'opération de sciage est terminée et avant le début de l'étape de liaison des fils de connexions électriques. Un tel procédé est particulièrement avantageux puisque, à l'aide d'une pince qui saisit le condensateur unitaire après sciage pour le transférer vers la station de soudure des fils de connexions, on réalise également le test électrique dudit condensateur, chaque mors de la pince jouant également le rôle d'une électrode de test, les mors étant bien entendu appliqués sur les connexions électriques latérales de schoopage. De préférence, l'étape de contrôle des paramètres électriques comportera plusieurs sous-étapes dont le début et/ou la fin sont commandés par des moyens électriques et/ou mécaniques. D'une manière connue en soi, les étapes de contrôle électrique peuvent être synchronisées à l'aide d'impulsions de synchronisation déclenchées par exemple par la fin de l'opération de sciage, la durée de l'ensemble des opérations étant inférieure à la durée du transfert par la pince de la station de sciage à la station de soudure des fils de connexions latérales. Toutefois, on utilisera de préférence pour le déclenchement de certaines sous-étapes des moyens mécaniques tels qu'un levier ou une came déclenchés par le mouvement de la pince ou les moyens électriques tels qu'une cellule photo-électrique déclenchée par le passage de ladite pince.

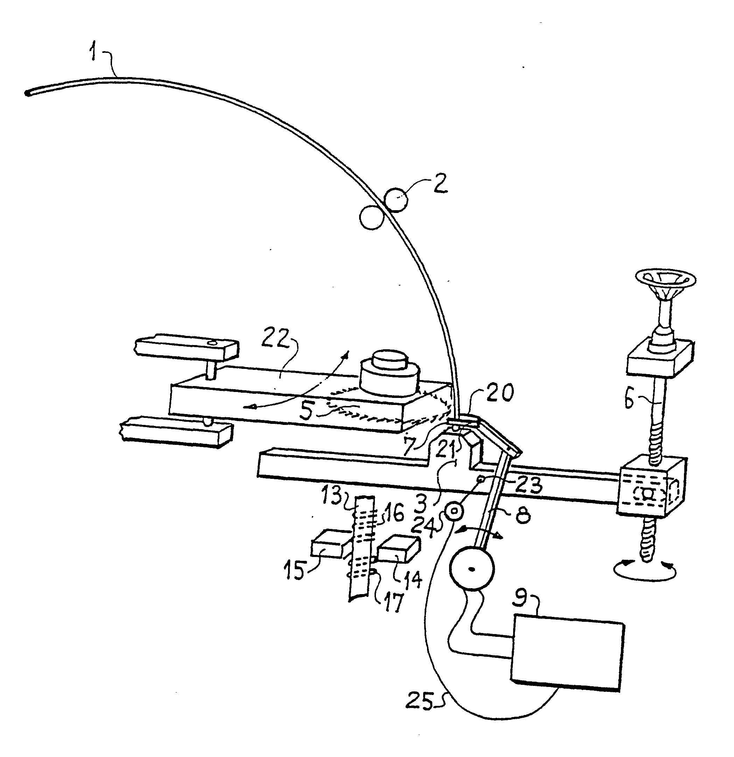

L'invention sera mieux comprise à l'aide des exemples de réalisation suivants, donnés à titre non limitatif, conjointement avec la figure unique qui représente une vue schématique d'un dispositif pour la fabrication en continu de condensateurs selon le procédé de l'invention.

Le condensateur mère 1 ayant la forme d'un barreau parallélépipédique arrondi, est guidé par une pluralité de rouleaux de guidage 2 et vient s'appuyer contre une butée 3 (la forme arrondie du barreau 1 s'explique par le fait que ce barreau a été obtenu dans ce cas particulier par bobinage sur une roue de grand diamètre puis tronçonnage radial). L'extrémité du barreau 1 située à proximité de la butée 3 est pris entre les mors 20 et 21 de la pince 7. Cette pince est reliée par un bras 8 articulé à un circuit électronique 9 de test électrique des condensateurs, connu en soi. Une scie circulaire 5 permet de tronçonner l'extrémité du barreau 1 à la longueur désirée au-dessus de la pince 7. Cette scie 5 se trouve sur un bras mobile 22 pouvant s'écarter et permettant à la pince de pivoter autour de son bras 8 de manière à amener le condensateur individuel obtenu par tronçonnage au contact d'une épingle de connexions 16 montée sur un ruban perforé 13. Ce type de ruban perforé 13 avec des connexions sous forme d'épingles 16 est bien connu de l'homme de métier et ne sera pas décrit plus en détail ici. Le condensateur individuel

après avoir été introduit entre les bras de l'épingle disposés face aux connexions latérales de schoopage est ensuite soudée électriquement à ceux-ci à l'aide des électrodes de soudure 14 et 15. Après soudure, on obtient un ensemble tel que 17, composé d'un condensateur individuel relié aux bras latéraux d'une connexion en forme d'épingle, ensemble solidaire de la bande 13.

Selon l'invention, on réalise la découpe du condensateur individuel à l'aide de la lame de scie 5 et pendant le transfert dudit condensateur individuel entre les électrodes de soudure 14 et 15, on effectue les tests électriques appropriés afin de déterminer si le condensateur est acceptable ou doit être rejeté. Ces tests, bien connus de l'homme de métier, peuvent être multiples et ne seront pas décrits en détail dans ce mémoire. Ils peuvent par exemple consister en une mesure de la capacité du condensateur de manière à déterminer si celle-ci se trouve dans les tolérances voulues. Ils peuvent également consister à envoyer dans le condensateur des signaux dits de décourt-circuitage du condensateur en faisant traverser celui-ci par un courant électrique convenable généralement constitué par une onde sinusoïdale. Un autre traitement également bien connu dit de régénération consiste à appliquer une tension continue d'amplitude croissante aux bornes dudit condensateur de manière à provoquer une volatilisation des armatures à proximité des défauts du diélectrique encore appelés points conducteurs. Ce traitement peut également consister à appliquer l'un ou plusieurs des traitements cités précédemment de façon séquentielle, en inversant la polarité des tensions utilisées. Enfin, on peut également procéder à des charges et décharges successives du condensateur dans une résistance afin de tester la solidité des liaisons internes.

Toutes ces opérations de test peuvent être effectuées séquentiellement entre le moment où le condensateur unitaire vient d'être découpé par la scie 5 et le moment où il est introduit entre les bras de la connexion en forme d'épingle 16. Ces différents traitements seront synchronisés avec le mouvement du bras et la durée de celui-ci. Un tel traitement sera réalisé à l'aide du générateur 9 qui ne présente pas des difficultés de réalisation particulières pour l'homme de métier. Le passage d'un type de traitement à l'autre, par exemple du traitement de décourt-circuitage au traitement de régénération peut se faire par une commande électronique synchronisée sur le début de l'opération de transfert du condensateur par le bras 8. Il suffit pour cela de mesurer le temps nécessaire au transfert et d'attribuer pour chaque traitement une période prédéterminée, la fin d'un traitement déclenchant le début du traitement suivant. L'opération peut être commandée initialement par le retour en position initiale de la lame de scie 5 sur son bras 22. On peut également déclencher un ou plusieurs traitements par détection mécanique ou électrique du mouvement du bras 8 par exemple lorsque celui-ci vient couper le trajet lumineux d'une cellule photoélectrique représentée par les éléments 23 et 24, ce dernier élément étant relié via 25 au générateur de signaux de traitement 9. Bien entendu, le mouvement du bras 8 peut également être détecté par un levier ou tout autre analogue que le bras 8 viendrait heurter au cours de son mouvement de transfert.

## Revendications

1. Procédé de fabrication en continu de condensateurs du type empilés, dans lequel on réalise tout d'abord un condensateur mère en forme de barreau parallélépipédique (1) comportant une pluralité de films diélectriques métallisés dont les couches métallisées respectivement de rangs pairs et impairs sont reliées entre elles par des connexions latérales de schoopage, ledit condensateur mère étant ensuite découpé par sciage en condensateurs unitaires qui sont contrôlés électriquement après sciage du caneau et avant soudure de connexions électriques sur les connexions latérales de schoopage, caractérisé en ce que l'extrémité du barreau parallélépipédique (1) est prise entre les mors (20, 21) d'une pince (7) avant sciage d'un condensateur unitaire, chaque mors étant appliqué sur l'une des connexions latérales de schoopage, le condensateur unitaire étant ensuite transféré à l'aide de la pince (7) vers une station de soudure (14, 15) des fils de connexions électriques, l'étape de contrôle des paramètres électriques du condensateur étant réalisée à l'aide d'un signal électrique envoyé entre les mors (20, 21) de la pince (7) dès que l'opération de sciage est terminée et avant le début de l'étape de liaison des fils de connexions électriques.

2. Procédé selon la revendication 1, caractérisé en ce que l'étape de contrôle des paramètres électriques comporte plusieurs sous-étapes dont le début et/ou la fin sont commandés par des moyens mécaniques et/ou électriques.

3. Procédé selon la revendication 2, caractérisé en ce que les moyens de commande du début et/ou de fin sont réalisés par l'interaction de la pince et d'un moyen électrique de déclenchement.

4. Procédé selon l'une des revendications 2 ou 3, caractérisé en ce que le moyen de déclenchement est constitué par un levier ou une cellule photo-électrique.

## Patentansprüche

1. Verfahren zur ununterbrochenen Herstellung von Kondensatoren des gestapelten Typs, in dem zunächst ein Mutterkondensator in Form eines quaderförmigen Stabs (1) ausgeführt wird, der eine Vielzahl von metallisierten dielektrischen Filmen umfaßt, deren metallisierte Schichten mit jeweils geraden und ungeraden Reihen untereinander durch schoopierte seitliche Anschlüsse verbunden sind, wobei dieser Mutterkondensator danach durch Zersägen in Einheitskondensatoren zerschnitten wird, die nach dem Zersägen des Stabs und vor dem Löten elektrischer Verbindungen auf den schoopierten seitlichen Anschlüssen elektrisch kontrolliert werden, dadurch gekennzeichnet, daß das äußerste Ende des quaderförmigen Stabs (1) zwischen den Backen (20, 21) einer Zange (7) vor dem Zersägen eines Einheitskondensators aufgenommen wird, wobei jede Backe auf einem der schoopierten seitlichen Anschlüsse angedrückt wird und der Einheitskondensator dann mit Hilfe der Zange (7) an eine Lötstation (14, 15) für die elektrischen Verbindungsdrähte weitergegeben wird, wobei die Kontrollphase der elektrischen Parameter des Kondensators mit Hilfe eines elektrischen Signals durchgeführt wird, das zwischen den Backen (20, 21) der Zange (7) gleich nach Beendigung des Sägevorgangs und vor Beginn der Verbindungsphase der elektrischen Verbindungsdrähte angewandt wird.

2. Verfahren nach Anspruch 1, dadurch gekennzeichnet, das die Kontrollphase der elektrischen Parameter mehrere Subphasen umfaßt, deren Beginn und/oder Ende durch mechanische und/oder elektrische Mittel gesteuert werden.

3. Verfahren nach Anspruch 2, dadurch gekennzeichnet, daß die Steuermittel des Beginns und/oder Endes durch die Wechselwirkung der Zange und eines elektrischen Auslösemittels durchgeführt werden.

4. Verfahren nach einem der Ansprüche 2 oder 3, dadurch gekennzeichnet, daß das Auslösemittel aus einem Hebel oder einer lichtelektrischen Zelle besteht.

**Claims**

1. A method of continuously producing capacitors of the film type, in which firstly a mother capacitor is produced in the form of a parallelepipedon bar (1) comprising a plurality of metallized dielectric films whose metallized layers respectively in the even and odd series are connected with each other by lateral metallized connections, the said mother capacitor being then cut up into unitary capacitors by sawing, which are electrically checked after sawing of the bar and before soldering electrical connections on the lateral metallized connections, characterized in that the end of the parallelepipedon bat (1) is taken between the jaws (20 and 21) of a tongs (7) prior to sawing of a unitary capacitor, each jaw being applied on one of the lateral metallized connections, the unitary capacitor then being transferred with the aid of the tongs (7) to a soldering station (14 and 15) for electrical connection leads, the stage of checking the electrical parameters of the capacitor being performed with the aid of an electrical signal caused to pass between the jaws (20 and 21) of the tongs (7) as soon as the operation of sawing is terminated and prior to commencement, of the stage of connection of the electrical leads.

2. The method as claimed in claim 1, characterized in that the stage of checking the electrical parameters comprises several sub-stages of which the start and/or the end are determined by mechanical and/or electrical means.

3. The method as claimed in claim 2, characterized in that the means of the control of the start and/or the end are constituted by the interaction of the tongs and an electrical means for starting the operation.

4. The method as claimed in claim 2 or claim 3, characterized in that the means for starting the operation is constituted by a lever or a photoelectric cell.